# EUROPEAN PATENT APPLICATION

(11) **EP 1 935 905 A1**
(43) Date of publication of application: **25.06.2008**
(21) Application number: 07122592.4
(22) Date of filing: 07.12.2007
(51) Int. Cl.: C08F 2/00, C08F 255/00, C08F 257/02, C08F 265/00, C08F 265/04, C08F 287/00, C08F 289/00, C08F 291/00

(54) **Process for preparing nano-sized polymer particles**

(30) Priority: 20.12.2006 US 613736
(71) Applicant: Xerox Corporation, Rochester, New York 14644 (US)
(72) Inventor: Keoshkerian, Barkev, Thornhill Ontario L4J 7E8 (CA)
(74) Representative: Grünecker, Kinkeldey, Stockmair & Schwanhäusser Anwaltssozietät

(57) **Abstract**

A process for preparing polymer particles, consisting of a latex polymer dispersion including particles of a liquid dispersible starting polymer in a dispersion liquid and growing a polymer shell on the particles via a starve fed free radical polymerization process.

## Description

### TECHNICAL FIELD

The present invention relates to a process for preparing functional polymer particles, and functional polymer particles formed thereby. More particularly, it relates to a process for preparing functional polymer particles on a water dispersible polymeric scaffolding using starve fed free radical polymerization, and functional polymer particles formed thereby.

### BACKGROUND

Present processes for preparation of functionalized nano-sized polymer architectures in a commercially viable manner are burdensome. Typically, preparation of nano-sized polymer particles results in low yields and requires large amounts of surfactant. Moreover, development time, material costs, and surfactant removal costs render conventional preparations inefficient and expensive.

In an example of the above-mentioned processes, preparation of nano-sized polymer particles occurs via a free radical polymerization process with the use of large amounts of surfactants where the ratio of surfactant to monomer is about 1:1. The nano-sized particle is formed when, during the initiation process, the radical enters the micelle (about 5 nm). However, micelles tend to form and deform throughout the polymerization process. This ultimately limits the solids content of such polymerizations. In fact, these processes generally result in a solids content of less than 10% with higher loadings resulting in reduced nano-sized particle product and particle size of up to only about 50 nm.

Recently, some research has shown that using a starve fed latex polymerization process to prepare nano-sized latex particles can produce final surfactant to monomer ratios around 1:15. This is achieved by keeping the actual surfactant to monomer ratio at any one time during the starve feed process at around 1:1. However, even with these improved methods, the particles tend to grow uncontrollably as the polymerization proceeds because micelle formation is dynamic and ongoing and the excess surfactant stabilizes the larger particles.

Seemingly, substantial advancement in this field could be achieved if the micelles could be frozen to a set number and prevented from forming and deforming during the polymerization process. In this case, nano-sized polymer particles could be formed and kept at a small size even during high solids loadings. Currently, there is no disclosed method of accomplishing this goal.

### SUMMARY

The present inventors have conducted research to overcome the mentioned inefficiencies and have developed a commercially advantageous process for preparing polymer particles using a latex polymeric framework and forming a polymer shell on the framework via a starve fed free radical polymerization process. An aspect of this process in embodiments is the presence of a hydrophilic group on the starting polymers to create water dispersibility. Another aspect of this process in embodiments is the method of controlled drop-wise addition of monomer during the starve feed process to regulate polymer particle growth.

This process is accomplished, in the presence or absence of surfactant, by substituting the micelles with polymer particles and is effective because polymer particles are more stable than micelles, allowing the particles to remain smaller (nano-sized). The particles are also static, which prevents continuous formation and deformation that otherwise would occur with micelles. In essence, the polymer particles act as polymeric scaffolding upon which new polymers can be formed. By adjusting the parameters such as initiator concentration, monomer composition, feed rate, temperature and others, preparation of nanometer- to micron-sized polymer particles is possible. Further, the polymers can be of miscible or immiscible types to afford core shell or onion-like morphology by varying the feed rates and monomer types.

In embodiments, the disclosure provides a process for preparing polymer particles, comprising providing a latex polymer dispersion framework, providing a polymer shell on said framework via a starve fed free radical polymerization process.

In other embodiments, the disclosure provides a process for preparing polymer particles, comprising providing water dispersible polymers in the presence of initiators resulting in a latex polymer dispersion framework, providing uniform monomers to said polymer framework via a starve fed free radical polymerization process, and providing nano-sized polymers of core-shell particle morphology.

In other embodiments, the disclosure provides a process for preparing polymer particles, comprising providing water dispersible polymers in the presence of initiators resulting in a latex polymer dispersion framework, providing non-uniform monomers to said polymer framework via a starve fed free radical polymerization process, and providing nano-sized polymers of onion particle morphology.

The present invention provides:
(1) a process for preparing polymer particles, comprising:
   providing a latex polymer dispersion comprising particles of a liquid dispersible starting polymer in a dispersion liquid; and
   growing a polymer shell on said particles via a starve fed free radical polymerization process;
(2) the process of (1), wherein the liquid dispersible starting polymer is water dispersible, and the dispersion liquid comprises water;
(3) the process of (1), wherein the liquid dispersible starting polymer is selected from the group consisting of styrene-based monomers, acrylate-based monomers, polyester-based monomers, wax polymers, block copolymers and polyolefins;
(4) the process of (1), wherein the polymer is present in the dispersion in an amount from about 1 to about 75% of the dispersion;
(5) the process of (1), wherein the latex polymer dispersion further comprises a free-radical initiator;
(6) the process of (5), wherein the free-radical initiator is selected from the group consisting of azo-type initiators or peroxide initiators;
(7) the process of (5), wherein the free-radical initiator is present in the dispersion in an amount from about 0.1 to about 10% of the monomer;
(8) the process of (1), wherein the latex polymer dispersion further comprises a surfactant;
(9) the process of (1), wherein growing a polymer shell on said particles comprises:
   adding monomers to the latex polymer dispersion via a starve feed free radical polymerization process;
   heating the latex polymer dispersion before, during, or after the addition of monomers has ceased; and
   optionally cooling said latex polymer dispersion;
(10) the process of (9), wherein the monomers are selected from the group consisting of styrene-based monomers, acrylate-based monomers, polyester-based monomers, wax polymers, and polyolefins;
(11) the process of (9), wherein the monomers are selected from the group consisting of styrene, butylacrylate or beta-carboxyethylacrylate;
(12) the process of (9), wherein the monomers are provided drop-wise;
(13) the process of (9), wherein the monomers are added over a time period of from about 2 hours to about 4.5 hours;
(14) the process of (9), wherein the monomers are added at a constant and regular rate;
(15) the process of (9), wherein the heating is at a temperature of from about 40°C to about 150°C;
(16) the process of (9), wherein the heating is at a temperature of about 80°C;
(17) the process of (1), wherein growing a polymer shell on said particles comprises adding only a single monomer species or mixture of monomer species to the latex polymer dispersion via a starve feed free radical polymerization process, whereby the polymer particles have a core formed of the liquid dispersible starting polymer and a shell formed of the single monomer species or mixture of monomer species;
(18) the process of (1), wherein growing a polymer shell on said particles comprises:
   adding a first monomer species or mixture of monomer species to the latex polymer dispersion via a starve feed free radical polymerization process; and
   followed by adding at least a second monomer species or mixture of monomer species to the latex polymer dispersion via a starve feed free radical polymerization process,
   whereby the polymer particles have a core formed of the liquid dispersible starting polymer, a first shell formed of the first monomer species or mixture of monomer species, and at least a second shell formed of the second monomer species or mixture of monomer species;
(19) a process for preparing polymer particles, comprising:
   providing a latex polymer dispersion comprising:
      particles of a liquid dispersible starting polymer,
      a dispersion liquid, and
   adding monomers and a free radical initiator to the latex polymer dispersion via a starve feed free radical polymerization process;
   heating the latex polymer dispersion before, during, or after the addition of monomers has ceased; and
   optionally cooling said latex polymer dispersion; and
(20) a polymer particle formed by the method of (1).

### EMBODIMENTS

In embodiments, the disclosure provides a two-step process for preparing functional polymer particles on a polymeric scaffolding using starve fed free radical polymerization. The first step generally comprises forming or providing a dispersion of polymer particles, also referred to as a polymer scaffold, in a liquid medium in the presence or absence of a surfactant. The second step generally comprises forming the functional polymer particles on the polymeric scaffold using starve fed free radical polymerization. The processes provide polymer particles having average particle sizes in the nanometer to micron size range.

The term "nano-sized" when referring to the average particle size refers, for example, to average particle sizes of from about 1 nanometer to about 100 nanometers, as understood by one ordinarily skilled in the art. For example, most nano-sized particles are about 20 nm. However, embodiments are not limited to "nano-sized" particles and may, in fact, include any particle size in the nano-range from about 1 nanometer to about 1 micron, but less than 1 micron. Likewise, the term "micron-sized" when referring to the average particle size refers, for example, to average particle sizes of from about 1 micron to about 100 microns. For example, micron-sized particles have average particle sizes of from about 1 micron to about 100 microns.

In the first step of the process, there is formed or otherwise provided a dispersion of polymer particles in a liquid medium in the presence or absence of a surfactant. This dispersion serves as a seed latex for subsequent particle growth in the starve fed free radical polymerization. This dispersion can be, for example, formed by dispersing any suitable polymer into a liquid medium in the presence or absence of a surfactant, where the polymer self-dissipates or can be dispersed to form nano-sized particles in the liquid medium. In embodiments, the nano-sized particles forming the polymer scaffold have an average particle size of, for example, from about 1 to about 100 nm, such as from about 15 to about 50 nm, or from about 25 to about 50 nm.

Any suitable liquid medium can be used in forming or providing the dispersion of polymer particles provided the polymer is insoluble in the liquid and has functional groups that can stabilize the polymer in the liquid. Thus, for example, suitable liquid mediums include water, such as deionized water, other inorganic solvents, organic solvents, isopar and the like. For example, polymethylmethacrylate, with block or random nonpolar groups that stabilize the polymer in isopar, can be used. In embodiments, water is used as it can be used to readily form dispersions of various hydrophilic polymers.

Likewise, any suitable hydrophilic group can be used in forming or providing the dispersion of polymer particles. Thus, for example, suitable hydrophilic groups include carboxyl groups, sulfonic acids, amines, amine salts, phosphonic salts and the like. In embodiments, a carboxyl group is used as it can be used to readily facilitate polymer dispersions.

Likewise, any suitable surfactant may be used in forming or providing the dispersion of polymer particles. Thus, for example, surfactants in amounts of about 0.01 to about 15, or preferably about 0. 5 to about 5 weight percent of the aqueous solution in embodiments can be used. In the embodiments, Dowfax is used as it can be used to readily facilitate polymer dispersions. Of course, any suitable surfactant can be used, if desired.

Examples of suitable surfactants that can be used for forming the polymer scaffold thus include, but are not limited to, nonionic surfactants such as dialkylphenoxypoly(ethyleneoxy) ethanol, available from Rhone-Poulenc as IGEPAL CA-210^{™}, IGEPAL CA-520^{™}, IGEPAL CA-720^{™}, IGEPAL CO-890^{™}, IGEPAL CO-720^{™}, IGEPAL CO-290^{™}, IGEPAL CA-210.^{™}, ANTAROX 890^{™} and ANTAROX 897.^{™} Examples of anionic surfactants include sodium dodecylsulfate (SDS), sodium dodecylbenzene sulfonate, sodium dodecylnaphthalene sulfate, dialkyl benzenealkyl, sulfates and sulfonates, adipic acid, available from Aldrich, NEOGEN R.^{™}, NEOGEN SC^{™}, available from Kao, Dowfax 2A1 (hexa decyldiphenyloxide disulfonate) and the like, among others. For example, an effective concentration of the nonionic or anionic surfactant is, in embodiments, from about 0.01 percent to about 15 percent by weight, or from about 0.5 percent to about 5 percent by weight of the aqueous solution.

Likewise, any suitable polymer can be used in forming or providing the dispersion of polymer particles. Thus, for example, suitable polymers include any polymers that are compatible with the liquid medium to provide a dispersion of polymer particles at the desired particle size for future particle growth. In embodiments, such as where water is used as the liquid medium, the polymer is a hydrophilic polymer, or is a polymer that includes hydrophilic functional groups to enable the desired dispersion to form.

Examples of suitable polymers that can be used for forming the polymer scaffold thus include, but are not limited to, polymer or polymers formed from styrene-based monomers, acrylate-based monomers, polyester-based monomers, wax polymers, and polyolefins. Thus, for example, examples of styrene-based monomers and acrylate-based monomers include, for example, poly(styrene-alkyl acrylate), poly(styrene-1,3-diene), poly(styrene-alkyl methacrylate), poly(styrene-alkyl acrylate-acrylic acid), poly(styrene-1,3-diene-acrylic acid), poly(styrene-alkyl methacrylate-acrylic acid), poly(alkyl methacrylate-alkyl acrylate), poly(alkyl methacrylate-aryl acrylate), poly(aryl methacrylate-alkyl acrylate), poly(alkyl methacrylate-acrylic acid), poly(styrene-alkyl acrylate-acrylonitrile-acrylic acid), poly(styrene-1,3-diene-acrylonitrile-acrylic acid), poly(alkyl acrylate-acrylonitrile-acrylic acid), poly(styrenebutadiene), poly(methylstyrene-butadiene), poly(methyl methacrylate-butadiene), poly(ethyl methacrylate-butadiene), poly(propyl methacrylate-butadiene), poly(butyl methacrylate-butadiene), poly(methyl acrylate-butadiene), poly(ethyl acrylate-butadiene), poly(propyl acrylate-butadiene), poly(butyl acrylate-butadiene), poly(styrene-isoprene), poly(methylstyrene-isoprene), poly(methyl methacrylate-isoprene), poly(ethyl methacrylate-isoprene), poly(propyl methacrylate-isoprene), poly(butyl methacrylate-isoprene), poly(methyl acrylate-isoprene), poly(ethyl acrylate-isoprene), poly(propyl acrylate-isoprene), and poly(butyl acrylate-isoprene); poly(styrene-propyl acrylate), poly(styrene-butyl acrylate), poly(styrene-butadiene-acrylic acid), poly(styrene-butadiene-methacrylic acid), poly(styrene-butadiene-acrylonitrile-acrylic acid), poly(styrene-butyl acrylate-acrylic acid), poly(styrene-butyl acrylate-methacrylic acid), poly(styrene-butyl acrylate-acrylonitrile), poly(styrene-butyl acrylate-acrylonitrile-acrylic acid), and other similar polymers.

Illustrative examples of polyester-based resins selected for the process and particles of the present disclosure include any of the various polyesters, such as polyethylene-terephthalate, polypropylene-terephthalate, polybutylene-terephthalate, polypentylene-terephthalate, polyhexalene-terephthalate, polyheptadene-terephthalate, polyoctalene-terephthalate, polyethylene-sebacate, polypropylene sebacate, polybutylene-sebacate, polyethylene-adipate, polypropylene-adipate, polybutylene-adipate, polypentylene-adipate, polyhexalene-adipate, polyheptadene-adipate, polyoctalene-adipate, polyethylene-glutarate, polypropylene-glutarate, polybutylene-glutarate, polypentylene-glutarate, polyhexalene-glutarate, polyheptadene-glutarate, polyoctalene-glutarate polyethylene-pimelate, polypropylene-pimelate, polybutylene-pimelate, polypentylene-pimelate, polyhexalene-pimelate, polyheptadene-pimelate, poly(propoxylated bisphenol-fumarate), poly(propoxylated bisphenol-succinate), poly(propoxylated bisphenol-adipate), poly(propoxylated bisphenol-glutarate), SPAR^{™} (Dixie Chemicals), BECKOSOL^{™} (Reichhold Chemical Inc), ARAKOTE^{™} (Ciba-Geigy Corporation), HETRON^{™} (Ashland Chemical), PARAPLEX^{™} (Rohm & Hass), POLYLITE^{™} (Reichhold Chemical Inc), PLASTHALL^{™} (Rohm & Hass), CYGAL^{™} (American Cyanamide), ARMCO^{™} (Armco Composites), ARPOL^{™} (Ashland Chemical), CELANEX^{™} (Celanese Eng), RYNITET^{™} (DuPont), STYPOL^{™} (Freeman Chemical Corporation) mixtures thereof and the like. The resins can also be functionalized, such as sulfonated and particularly such as sodio sulfonated, if desired.

Other examples of polymer-based resins selected for the process and particles of the present disclosure include waxes or polyolefins, such as polyethylene, polypropylene, polypentene, polydecene, polydodecene, polytetradecene, polyhexadecene, polyoctadene, and polycyclodecene, polyolefin copolymers, mixtures of polyolefins, bi-modal molecular weight polyolefins, functional polyolefins, acidic polyolefins, hydroxyl polyolefins, branched polyolefins, for example, such as those available from Sanyo Chemicals of Japan as VISCOL 550P^{™} and VISCOL 660P^{™}, Mitsui "Hi-wax" NP055 and NP105, or wax blends such as MicroPowders, Micropro-440 and 440w.

Still other examples include block copolymers where one block is hydrophilic and at least one other block is hydrophilic. For example, poly(styrene-b-styrenesulfonate) can be used.

The monomers used in making the selected polymer are not limited, and the monomers utilized may include any one or more of, for example, styrene, methacrylates, amides, amines, acrylates such as methacrylates, butylacrylates, β-carboxy ethyl acrylate (β-CEA), etc., butadiene, isoprene, acrylic acid, methacrylic acid, itaconic acid, acrylonitrile, benzenes such as divinylbenzene, etc., and the like. Known chain transfer agents, for example dodecanethiol or carbon tetrabromide, can be utilized to control the molecular weight properties of the polymer. Any suitable method for forming the latex polymer from the monomers may be used without restriction.

Mixtures of two or more of the above polymers can also be used, if desired.

In particular embodiments, the dispersion of polymer particles or latex emulsion is formed or provided to include as the polymer, a styrene-alkyl acrylate or a polyester such as a sulfonated polyester. Maleated olefins, such as CERAMER (Baker Hughes), are also preferred.

The liquid medium and polymer are generally present in the dispersion or latex in any suitable amount to provide the desired dispersion. For example, in embodiments, the polymer can be present in the dispersion in an amount of from about 1 to about 75% by weight, such as from about 5 to about 50% or from about 10 to about 25% by weight. Of course, amounts outside of these ranges can be used, if desired.

Once the polymer dispersion or latex is formed, it can optionally be heated to an elevated temperature in preparation for the subsequent starve feed polymerization reaction. If heating is desired, it can be at any suitable temperature that is compatible with the reaction components, such as the polymer scaffold material, liquid medium, initiator, and additional monomer or monomers. For example, in embodiments, the polymer dispersion or latex can be heated to a temperature of from about 30 to about 100°C, such as from about 35 to about 90°C or about 40 or about 50 to about 75 or about 80°C. In embodiments, a temperature of from about 55 to about 75°C can be used.

The polymer particle growth can be conducted in any suitable manner, such as by free radical polymerization such as starve feed free radical polymerization. Starve feed polymerization is desired, in embodiments, because it allows for more precise control of particle size growth and loading concentration. Further, starve feed polymerization has the benefit that at any given time, a ratio of surfactant to monomer can be maintained at a suitable level of for example about 1:1. These conditions are particularly suitable for desired particle growth.

To initiate polymerization, suitable initiator or initiators and monomer or monomers are added to the polymer dispersion or latex. Desirably, all of the initiator or initiators is added at the same time, either prior to monomer addition or at the start of monomer addition. However, the initiator or initiators can also be metered in over time. In embodiments, any suitable initiator can be used. Examples of useful optional free radical initiators that can be selected include azo-type initiators such as 2-2'-azobis(dimethyl-valeronitrile), azobis(isobutyronitrile), azobis(cyclohexane-nitrite), azobis(methyl-butyronitrile), mixtures thereof, and the like, peroxide initiators such as benzoyl peroxide, lauroyl peroxide, methyl ethyl ketone peroxide, isopropyl peroxy-carbonate, 2,5-dienethyl-2,5-bas(2-ethylhexanoyl-peroxy)hexane, di-tert-butyl peroxide, cumene hydroperoxide, dichlorobenzoyl peroxide, potassium persulfate, ammonium persulfate, sodium bisulfate, combination of potassium persulfate, sodium bisulfate and the like, and mixtures thereof. Other useful free radical initiators will become readily apparent to one of skill in the art based on the present disclosure. An effective quantity of an initiator is generally about 0.1 percent to about 5 percent by weight of the monomer.

To proceed with polymer particle growth, the desired monomer or monomers are next added to the polymer dispersion or latex. Selection of specific monomer or monomers can be conducted, for example, to provide desired polymer particle properties, structure, or the like. In embodiments, any suitable monomer or monomers can be added for particle growth, including any of the monomers mentioned above for use in forming the polymer dispersion or latex. Thus, for example, the same monomer or monomers used in forming the polymer dispersion or latex can be used where uniform particle chemistry is desired, or different monomer or monomers can be used where non-uniform particle chemistry is desired. For example, if a different monomer(s) is used, then the final polymer particles would have the appearance of a core-shell particle, where the shell is formed of a different polymer than the core. Alternatively, if two or more different monomers or mixtures of monomers are successively added during the polymer particle growth, then the final polymer particles would have the appearance of an onion, where successive concentric layers shell are formed of different polymers.

Furthermore, monomers miscible or immiscible with the particle can be used to design particle morphology. In embodiments, immiscible monomers exhibit phase separation from the newly formed polymer. In embodiments, the core-shell location will be effected by the hydrophilicity of the monomer and the particle polymer. Other modifications will be apparent based on the disclosure.

The addition of the monomer or monomers to the polymer dispersion or latex can be conducted by manual, mechanical, electronic, automatic, or the like, drop-wise or metered addition. Drop-wise addition is desired, in embodiments, because it allows for more precise control of particle size growth and duration of polymerization. Further, drop-wise addition has the benefit of stabilizing and facilitating the starve feed polymerization process. These conditions are particularly suitable for desired particle growth. Of course, other methods of adding the monomer are suitable, if desired.

The addition of the monomer or monomers to the polymer dispersion or latex can be conducted for any suitable amount of time. For example, in embodiments, monomers can be added for a period from about 2 hours to about 4.5 hours, such as about a 3.5-hour period or about a 4-hour period. These periods are desired, in embodiments, because they provide a suitable polymerization reaction. However, it will be apparent that the addition time will be related to the desired addition rate and method, and the amount of monomer or monomers to be added. Of course, longer or shorter periods outside of this range can be used, if desired.

Any suitable amount of monomer or monomers can be added to the polymer dispersion or latex during the monomer addition to obtain the desired particle size and structure. For example, in embodiments, drops of monomer solution are applied stepwise, such as a drop of monomer solution applied constantly over a period of time. In other embodiments, monomer solution can be added in the amount of about 1 ml to about 10 ml at a time. A drop-wise addition is desired, in embodiments, because it accomplishes controlled starve feed polymerization. Of course, any amount of monomer solution could be added at each step, as desired.

The addition of monomer or monomers can be added to the polymer dispersion or latex at any suitable rate of addition. For example, in some embodiments, the rate of monomer addition is constant and regular over the period of addition. In other embodiments, monomer addition can also be constant and irregular, or inconsistent and irregular, or the like. Constant rate of addition is desired, in embodiments, because it allows for consistent and stable polymer growth. Of course, any rate of addition can be used, if desired.

The reaction of monomer or monomers and the polymer dispersion or latex can occur by any suitable means. For example, in embodiments, the reaction occurs exothermically upon mixing of the monomer solution and the polymer dispersion. In embodiments, the reaction can also occur with heat application, shaking, stirring, pressure adjustment, or addition of catalysts, by manual or automatic means. A stand alone exothermic reaction or reactions is desired, in embodiments, because it provides a suitable environment for controlled polymerization. Of course, any factor influencing the reaction can be manipulated, if desired.

If desired or necessary, the reaction of monomer or monomers and the polymer dispersion or latex can be conducted at any suitable temperature, and can be conducted with or without external heating. For example, although an exotherm typically will occur upon reaction of the monomer or monomers and the polymer dispersion or latex, additional heating or cooling can also be applied during the reaction. In embodiments, the reaction mixture is desirably kept at about a constant temperature, to provide desirable reaction kinetics. For example, the reaction mixture can be maintained at a temperature of from about room temperature to about 150°C, such as from about 30 or 40°C to about 100 or about 125°C, such as from about 60 to about 80°C. In embodiments, heating is desired because it increases the reaction rate. Although it will be appreciated that such heating is not required.

Furthermore, even after completion of monomer or monomers addition, further heating for a period of time can be conducted to assist with polymerization to high conversion. The heating can be conducted at any suitable temperature, such as at the reaction temperature maintained during monomer or monomers addition.

To proceed with and complete polymerization, after the heating period, the monomer-polymer dispersion reaction is next optionally cooled. The cooling can occur continuously or discontinuously, with interrupted periods of further heating or stagnant cooling rate, and naturally or mechanically, such as by refrigeration, or by any suitable means, and continues for as long or short as necessary for polymer growth to slow enough for suitable extraction. For example, in embodiments, cooling occurs continuously and naturally. Of course, any cooling methodology or apparatus is suitable, if desired.

To complete polymer particle growth and extraction, after the cooling period, the functionalized particles can optionally be harvested. For example, any suitable manual, mechanical, electronic, or automatic means for optionally separating, drying, diluting, emulsifying, siphoning or the like, the cooled polymer solution can be used as a means for harvesting the functional polymers. Of course, use of any method, means, or apparatus to effectuate extraction is suitable, if desired. Alternatively, in embodiments, the dispersion of functionalized polymer particles can be directly used, without intermediate separation, in subsequent processes.

The above processes may be used, for example, to prepare functionalized nano-sized polymer particles in a latex process, and on a scale that can be used for commerical purposes. In particular, in embodiments, the processes can be used to prepare functionalized polymer particles having average particle sizes from the nano-sized (such as from about 1 nanometer or about 25 nanometers to about 1 micron, but less than 1 micron) to micron-sized (such as from about 1 micron to about 100 microns). Furthermore the polymers can be of immiscible types to afford core shell morphology or of onion like morphology by varying the feed rates and monomer types.

The following examples are illustrative of embodiments of the present invention, but are not limiting of the invention. It will be apparent that the invention can be practiced with many different water dispersible polymers, initiators and monomers and can be used for a variety of different uses in accordance with the disclosure above and as pointed out hereinafter.

### EXAMPLES

### EXAMPLE 1

A sulphonated polyester (4%) emulsion (12% loading, 1118 g) was heated to about 55°C and then a solution of initiator (ammonium persulfate, 3.18 g in 50 g with water) was added forming a latex. The latex was then drop-wise treated with a monomer solution consisting of styrene (105 mL), butylacrylate (35 mL) and beta-carboxyethylacrylate (4.18 g) over a 4-hour period. The reaction reached 80°C within 10 minutes after the start of the drop-wise monomer addition. The latex was further heated for 3 hours at 80°C and subsequently cooled. Resulting analysis of the residual monomer content revealed 120 ppm for n- butylacrylate, 198 ppm for styrene, and a solids content of 20.8%. The table below shows the volume polymer particle size during the incubation period for Example 1:

| **Time (min)** | **Particle Size (nm)** |
|---|---|
| 0 | 25 |
| 30 | 29.9 |
| 240 | 35.4 |
| 345 | 34.1 |
| Cooled | 36.4 |

### EXAMPLE 2

A sulphonated polyester (4%) emulsion (12% loading, 1085 g) was heated to about 55°C and then a solution of initiator (ammonium persulfate, 6.2 g in 50 g with water) was added forming a latex. The latex was then drop-wise treated with a monomer solution consisting of styrene (105 mL), butylacrylate (35 mL) and beta-carboxyethylacrylate (4.18 g) over a 2-hour period. The reaction reached 80°C within 10 minutes after the start of the drop-wise monomer addition. The latex was further heated for 4 hours at 80°C and subsequently cooled. The table below shows the volume polymer particle size during the incubation period for Example 2:

| **Time (min)** | **Particle Size (nm)** |
|---|---|
| 50 | 34.5 |
| 118 | 41.7 |
| 160 | 47.2 |
| 280 | 53.1 |
| 495 | 55.5 |
| Cooled | 53.3 |

### EXAMPLE 3

Styrenesulfonate-b-styrene block copolymer (polystyrenesulfonate(Na)-b-polystyrene, 53 g) and water (947 g) were heated to 74°C. The solution was stirred for 1 hour and then cooled resulting in a stable nano-particle of 26.6 nm. The solution was then reheated to 40°C and then initiator (ammonium persulfate, 4.56 g) was added. The resulting latex was then drop-wise treated with a monomer solution consisting of styrene (210 mL), butylacrylate (70 mL), doddecylthiol (5.7 g) and beta-carboxyethylacrylate (4.2 g) over a 4-hour period. The reaction reached 80°C within 10 minutes after the start of the drop-wise monomer addition. The latex was further heated for 2 hours at 80°C and subsequently cooled. The table below shows the volume polymer particle size during the incubation period for Example 3:

| **Time (min)** | **Particle Size (nm)** |
|---|---|
| 45 | 34.5 |
| 80 | 36 |
| 140 | 41.8 |
| 270 | 47.9 |
| 370 | 49.3 |
| Cooled | 54.4 |

### EXAMPLE 4

A sulphonated polyester (4%) emulsion (12% loading, 1118 g) and surfactant (Dowfax, 5 g) was heated to about 55°C and then a solution of initiator (ammonium persulfate, 3.18 g in 50 g with water) was added forming a latex. The latex was then drop-wise treated with a monomer solution consisting of styrene (105 mL), butylacrylate (35 mL) and beta-carboxyethylacrylate (4.2 g) over a 3.5-hour period. The reaction reached 80°C within 10 minutes after the start of the drop-wise monomer addition. The latex was further heated for 4.5 hours at 80°C and subsequently cooled. The table below shows the volume polymer particle size during the incubation period for Example 4:

| **Time (min)** | **Particle Size (nm)** |
|---|---|
| 20 | 28.4 |
| 60 | 28.2 |
| 118 | 32.4 |
| 210 | 35.7 |
| 310 | 35.1 |
| Cooled | 38.4 |

### EXAMPLE 5

A sulphonated polyester (4%) emulsion (12% loading, 1110 g) was heated to about 55°C and then a solution of initiator (ammonium persulfate, 4.8 g in 50 g with water) was added forming a latex. The latex was then drop-wise treated with a monomer solution consisting of styrene (210 mL), butylacrylate (70 mL), dodecylthiol (5.24 g) and beta-carboxyethylacrylate (4.18 g) over a 4.5-hour period. The reaction reached 80°C within 10 minutes after the start of the drop-wise monomer addition. The latex was further heated for 3 hours at 80°C and subsequently cooled. Resulting analysis of the residual monomer content revealed a solids content of 34.8%. The table below shows the volume polymer particle size during the incubation period for Example 5:

| **Time (min)** | **Particle Size (nm)** |
|---|---|
| 30 | 30.7 |
| 150 | 44.3 |
| 270 | 65.7 |
| 480 | 76.8 |
| Cooled | 81.5 |

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims.

## Claims

1. A process for preparing polymer particles, comprising:
providing a latex polymer dispersion comprising particles of a liquid dispersible starting polymer in a dispersion liquid; and
growing a polymer shell on said particles via a starve fed free radical polymerization process.

2. The process of claim 1, wherein the liquid dispersible starting polymer is water dispersible, and the dispersion liquid comprises water.

3. The process of claim 1, wherein the liquid dispersible starting polymer is selected from the group consisting of styrene-based monomers, acrylate-based monomers, polyester-based monomers, wax polymers, block copolymers and polyolefins.

4. The process of claim 1, wherein the polymer is present in the dispersion in an amount from about 1 to about 75% of the dispersion.

5. The process of claim 1, wherein the latex polymer dispersion further comprises a free-radical initiator.

6. The process of claim 1, wherein growing a polymer shell on said particles comprises:
adding monomers to the latex polymer dispersion via a starve feed free radical polymerization process;
heating the latex polymer dispersion before, during, or after the addition of monomers has ceased; and
optionally cooling said latex polymer dispersion.

7. The process of claim 1, wherein growing a polymer shell on said particles comprises adding only a single monomer species or mixture of monomer species to the latex polymer dispersion via a starve feed free radical polymerization process, whereby the polymer particles have a core formed of the liquid dispersible starting polymer and a shell formed of the single monomer species or mixture of monomer species.

8. The process of claim 1, wherein growing a polymer shell on said particles comprises:
adding a first monomer species or mixture of monomer species to the latex polymer dispersion via a starve feed free radical polymerization process; and
followed by adding at least a second monomer species or mixture of monomer species to the latex polymer dispersion via a starve feed free radical polymerization process,
whereby the polymer particles have a core formed of the liquid dispersible starting polymer, a first shell formed of the first monomer species or mixture of monomer species, and at least a second shell formed of the second monomer species or mixture of monomer species.

9. A process for preparing polymer particles, comprising:
providing a latex polymer dispersion comprising:
particles of a liquid dispersible starting polymer,
a dispersion liquid, and
adding monomers and a free radical initiator to the latex polymer dispersion via a starve feed free radical polymerization process;
heating the latex polymer dispersion before, during, or after the addition of monomers has ceased; and
optionally cooling said latex polymer dispersion.

10. A polymer particle formed by the method of claim 1.
